# EUROPÄISCHE PATENTSCHRIFT

(11) **EP 3 317 947 B1**
(45) Veröffentlichungstag und Bekanntmachung des Hinweises auf die Patenterteilung: **27.11.2019**
(21) Anmeldenummer: 16722241.3
(22) Anmeldetag: 13.05.2016
(51) Int. Cl.: H02K 1/27, H02K 1/16, H02K 21/14

(54) **PERMANENT ERREGTE ELEKTRISCHE MASCHINE MIT OPTIMIERTER GEOMETRIE**
PERMANENT-MAGNET ELECTRICAL MACHINE WITH OPTIMIZED GEOMETRY
MACHINE ÉLECTRIQUE EXCITÉE EN PERMANENCE À GÉOMÉTRIE OPTIMISÉE

(30) Priorität: 30.06.2015 DE 102015212127
(43) Veröffentlichungstag der Anmeldung: 09.05.2018
(73) Patentinhaber: Robert Bosch GmbH, 70442 Stuttgart (DE)
(72) Erfinder: KELLETER, Arndt, 71729 Erdmannhausen (DE); VOELZ, Karsten, 71229 Leonberg (DE); KOL, Murat, 70437 Stuttgart (DE)
(86) Internationale Anmeldenummer: PCT/EP2016/060830
(87) Internationale Veröffentlichungsnummer: WO 2017/001105

(56) Entgegenhaltungen:
- CN-U- 203 180 670
- JP-A- 2011 050 216

## Beschreibung

### Gebiet der Erfindung

Die Erfindung betrifft eine elektrische Maschine, etwa einen Motor oder einen Generator. Insbesondere betrifft die Erfindung eine permanent erregte Synchronmaschine.

### Stand der Technik

Elektrische Maschinen werden in einer Vielzahl von industriellen Anwendungen eingesetzt und zunehmend in der Automobilindustrie als Antrieb für Kraftfahrzeuge genutzt, etwa für Hybridkraftfahrzeuge oder für rein elektrisch angetriebene Kraftfahrzeuge.

In Kraftfahrzeugen eingesetzte elektrische Maschinen sind häufig als permanent erregte Synchronmaschinen ausgestaltet und weisen einen Stator sowie einen relativ zum Stator drehbar gelagerten Rotor auf.

Die Rotoren weisen in der Regel ein oder mehrere Lamellenpakete, auch Rotorpakete genannt, aus in Längserstreckungsrichtung des Rotors übereinander gestapelten Blechlamellen auf. In in Umfangsrichtung des Rotors beabstandeten Ausnehmungen des Rotors, sogenannten Magnettaschen, sind Permanentmagnete angeordnet, deren Magnetfelder durch Wechselwirkung mit einem von dem Stator generierten Magnetfeld zum Antrieb des Rotors genutzt werden können. Häufig weisen permanent erregte elektrische Maschinen pro Pol der elektrischen Maschine zwei V-förmig zueinander und jeweils in einer Magnettasche angeordnete Permanentmagnete auf.

Insbesondere bei sogenannten SMG-Typen von elektrischen Maschinen (separater Motor-Generator, SMG) wird ferner häufig eine Ganzlochwicklung mit einer Lochzahl q=2 eingesetzt, wodurch in einem Luftspalt zwischen dem Rotor und dem Stator ein Magnetfeld mit geringem Oberwellenanteil bzw. geringem Oberfeldanteil entstehen kann. Dies kann ferner zur Folge haben, dass in den Permanentmagneten geringe Wirbelstromverluste bzw. Eisenverluste auftreten, so dass eine Temperatur der Permanentmagnete gering gehalten und eine kostengünstige Klasse von Permanentmagneten eingesetzt werden kann. Mit steigender Lochzahl q können Eisenverluste und damit Gesamtverluste der elektrischen Maschine bei hohen Drehzahlen zunehmen.

Die DE 10 2012 219 055 A1 beschreibt eine drehende elektrische Maschine mit pro Pol der elektrischen Maschine jeweils zwei V-förmig in einem Rotor angeordneten Permanentmagneten. Die Permanentmagnete sind dabei in einem Magnetpol-Öffnungswinkel zueinander angeordnet, welcher einen Scheitelpunkt auf einer Rotorachse besitzt.

Aus der JP 2011050216 A ist eine elektrische Maschine mit einem Rotor bekannt, der in einem Magnetpol zwei Magnettaschen aufweist. Die Magnettaschenhöhe beträgt in einer ersten Ausführung 5mm bei einer Polbedeckung von 115° el. und in einer zweiten Ausführung 6mm bei einer Polbedeckung von 120° el.. Dies ergibt ein Verhältnis der Magnettaschenhöhe zur gemeinsamen Polbedeckung von 0,043 mm/°el. bzw. 0,05 mm/°el..

### Offenbarung der Erfindung

### Vorteile der Erfindung

Ausführungsformen der vorliegenden Erfindung können in vorteilhafter Weise ermöglichen, eine bezüglich eines maximal erzeugbaren Drehmoments sowie bezüglich Verlusten, insbesondere Wirbelstromverlusten und/oder Eisenverlusten, optimierte elektrische Maschine bereitzustellen.

Gemäß einem Aspekt der Erfindung wird eine permanent erregte elektrische Maschine, etwa eine permanent erregte Synchronmaschine, vorgeschlagen. Die elektrische Maschine weist einen Stator auf, welcher entlang eines Umfangs des Stators nebeneinander angeordnete und jeweils durch einen Zahn des Stators voneinander beabstandete Nuten aufweist, in welchen Nuten jeweils eine Statorwicklung angeordnet ist. Weiter weist die elektrische Maschine einen um eine Drehachse relativ zum Stator drehbar gelagerten und konzentrisch zum Stator angeordneten Rotor auf, wobei der Rotor pro Pol der elektrischen Maschine jeweils eine erste Magnettasche mit einem darin angeordneten wenigstens einen ersten Magnetelement und eine zweite Magnettasche mit einem darin angeordneten wenigsten einen zweiten Magnetelement aufweist. Die erste Magnettasche und die zweite Magnettasche weisen dabei jeweils eine Magnettaschenhöhe auf. Die erfindungsgemäße elektrische Maschine zeichnet sich insbesondere dadurch aus, dass ein Verhältnis der Magnettaschenhöhe zu einer gemeinsamen Polbedeckung der ersten Magnettasche und der zweiten Magnettasche zwischen 0,03 mm/°el. und 0,041 mm/°el. beträgt. Vorzugsweise beträgt das Verhältnis der Magnettaschenhöhe zur gemeinsamen Polbedeckung der ersten Magnettasche und zweiten Magnettasche zwischen 0,0307 mm/°el. und 0,0409 mm/°el.. Der Pol der elektrischen Maschine kann dabei einen magnetischen Pol und/oder ein Segment der elektrischen Maschine bezeichnen. Der Winkel eines Segmentes kann dabei 360°mech. geteilt durch die Anzahl der magnetischen Pole der elektrischen Maschine entsprechen.

Der Rotor der elektrischen Maschine kann wenigstens ein Lamellenpaket aus in Längserstreckungsrichtung des Rotors übereinander gestapelten Blechlamellen aufweisen, in welchen die Magnettaschen, z.B. als Ausstanzungen, eingebracht sein können. Die einzelnen Magnettaschen können sich dabei im Wesentlichen über eine gesamte Länge des Rotors erstrecken und pro Magnettasche kann eine Mehrzahl von Magnetelementen, z.B. in Form von Permanentmagneten, in Längserstreckungsrichtung des Rotors nebeneinander angeordnet und/oder übereinander gestapelt sein. Die einzelnen Magnettaschen können so im Wesentlichen quaderförmige Ausnehmungen in dem Rotor ausbilden, welche in einem Querschnitt durch den Rotor jeweils zwei im Wesentlich parallel zueinander und parallel zur Drehachse des Rotors verlaufende Hauptflächen aufweisen, auf welchen die Magnetelemente abgestützt sein können. Mit anderen Worten können sich die Hauptflächen in Längserstreckungsrichtung bzw. in axialer Richtung der elektrischen Maschine erstrecken. Die Magnettaschenhöhe kann dabei einen Abstand der beiden Hauptflächen der Magnetaschen bezeichnen. Die einzelnen Magnettaschen der elektrischen Maschine können im Wesentlichen identische Magnettaschenhöhen aufweisen.

Die gemeinsame Polbedeckung der ersten Magnettasche und der zweiten Magnettasche kann einen Winkel zwischen einer ersten Außenkante der ersten Magnettasche und einer zweiten Außenkante der zweiten Magnettasche bezeichnen, wobei die erste und zweite Außenkante an zwei sich gegenüberliegenden Randbereichen des Pols der elektrischen Maschine angeordnet sein können. Mit anderen Worten kann die gemeinsame Polbedeckung einen Winkel zwischen einem ersten an der ersten Außenkante der ersten Magnettasche anliegenden Schenkel und einem zweiten an der zweiten Außenkante der zweiten Magnettasche anliegenden Schenkel bezeichnen. Die Polbedeckung wird dabei typischerweise in Grad elektrisch (°el.) angegeben, welche über eine Polpaarzahl der elektrischen Maschine in mechanische Grad umgerechnet werden kann.

Durch die erfindungsgemäße Geometrie der elektrischen Maschine mit dem erfindungsgemäßen Verhältnis der Magnettaschenhöhe zur gemeinsamen Polbedeckung der ersten und zweiten Magnettasche kann in vorteilhafter Weise ein Drehmoment der elektrischen Maschine optimiert und/oder maximiert sein. Insbesondere kann dadurch ein Reluktanzmoment der elektrischen Maschine optimiert und/oder maximiert sein, d.h. ein Drehmoment der elektrischen Maschine, welches aus einer Geometrie der elektrischen Maschine bzw. einem Blechschnitt des Rotors unter Vernachlässigung eines auf den Magnetelementen basierenden magnetischen Drehmoments resultiert. Bei Maximierung des Reluktanzmoments kann ferner Magnetmaterial für die Magnetelemente eingespart werden, so dass Kosten für die elektrische Maschine eingespart werden können.

Ideen zu Ausführungsformen der vorliegenden Erfindung können unter anderem als auf den nachfolgend beschriebenen Gedanken und Erkenntnissen beruhend angesehen werden. Kenngrößen von elektrischen Maschinen, wie beispielsweise das Drehmoment und Verluste der elektrischen Maschine, insbesondere Wirbelstromverluste und/oder Eisenverluste, können von einer Vielzahl von die Geometrie der elektrischen Maschine betreffenden Größen (geometrische Größen) und/oder Parametern abhängen. Ferner können Kenngrößen der elektrischen Maschine untereinander in Konkurrenz stehen, d.h. eine Optimierung einer Kenngröße kann eine Verschlechterung einer anderen Kenngröße zur Folge haben. Entsprechend können die geometrischen Größen und/oder Parameter der elektrischen Maschine im Hinblick auf einen Kompromiss zwischen konkurrierenden Kenngrößen optimiert und/oder gewählt werden, was beispielsweise im Rahmen einer Multizieloptimierung bewerkstelligt werden kann. Die in dieser Erfindung vorgeschlagenen geometrischen Größen der elektrischen Maschine können eine derartige Optimierung der elektrischen Maschine hinsichtlich des Drehmoments und/oder einer Leistung der elektrischen Maschine darstellen, wobei die geometrischen Größen insbesondere hinsichtlich einer Eisenlänge, Verlusten, einer Qualität und/oder einem Preis der Magnetelemente, einer Kupfermasse und/oder einer Drehmomentwelligkeit einen optimalen Kompromiss darstellen können. Auch können die geometrischen Größen derart optimiert sein, dass beispielsweise eine Kenngröße optimiert ist bei gleichzeitiger Maximierung anderer Freiheitsgrade. Insbesondere kann die erfindungsgemäße elektrische Maschine derart optimiert sein, dass sie eine hohe Drehmomentdichte und/oder Leistungsdichte bei gleichzeitig geringen Verlusten, kostengünstigen Magneten und einer geringen Drehmomentwelligkeit aufweisen kann.

Gemäß einer Ausführungsform der Erfindung beträgt eine Polbedeckung des ersten Magnetelements und des zweiten Magnetelements zwischen 104 °el. und 120 °el., vorzugsweise zwischen 104,1°el. und 119,5 °el.. Die Polbedeckung des ersten und zweiten Magnetelements kann dabei eine gemeinsame Polbedeckung des ersten und zweiten Magnetelements bezeichnen. Die Polbedeckung kann einen Winkel zwischen einem ersten Schenkel, welcher an einer dem Stator am nächstgelegenen Kante des ersten Magnetelements anliegen kann, und einem zweiten Schenkel, welcher an einer dem Stator am nächstgelegenen Kante des zweiten Magnetelements anliegen kann, bemessen sein. Durch die erfindungsgemäß bemessene Polbedeckung des ersten und zweiten Magnetelements kann in vorteilhafter Weise ein Drehmoment der elektrischen Maschine optimiert und/oder maximiert sein.

Gemäß einer Ausführungsform der Erfindung beträgt die gemeinsame Polbedeckung der ersten Magnettasche und der zweiten Magnettasche zwischen 152 °el. und 175 °el., vorzugsweise zwischen 152,7 °el. und 174,5 °el.. Durch die erfindungsgemäß bemessene gemeinsame Polbedeckung der ersten und zweiten Magnettasche kann in vorteilhafter Weise ein Drehmoment der elektrischen Maschine optimiert und/oder maximiert sein.

Gemäß einer Ausführungsform der Erfindung sind das erste Magnetelement und das zweite Magnetelement V-förmig zueinander angeordnet, wobei ein V-Winkel des ersten Magnetelements und des zweiten Magnetelements jeweils zwischen 10 °mech. (Grad meachanisch) und 29 °mech., vorzugsweise zwischen 11,0 °mech. und 28,3°mech., beträgt. Die Magnetelemente können derart V-förmig zueinander angeordnet sein, dass die V-Form in Richtung des Stators geöffnet ist. Der V-Winkel kann dabei zwischen einer waagerechten Tangente an einer dem Stator am nächstgelegenen Kante eines Magnetelements und einer in Richtung des Stators gerichteten Hauptfläche des jeweiligen Magnetelements bemessen sein. Das erste und zweite Magnetelement können derart V-förmig zueinander angeordnet sein, dass ein Winkel zwischen einer Längserstreckungsrichtung des ersten und einer Längserstreckungsrichtung des zweiten Magnetelements einer Differenz von 180 °mech. und dem doppelten Betrag des V-Winkels entsprechen kann.

Gemäß einer Ausführungsform der Erfindung beträgt ein Verhältnis eines Statorinnendurchmessers des Stators zu einem Statoraußendurchmesser des Stators zwischen 0,6 und 0,8, vorzugsweise zwischen 0,64 und 0,72. Dadurch kann in vorteilhafter Weise ein Drehmoment der elektrischen Maschine weiter optimiert und/oder maximiert sein.

Gemäß einer Ausführungsform der Erfindung weist die elektrische Maschine eine Lochzahl größer oder gleich eins auf. Insbesondere kann die elektrische Maschine eine Lochzahl gleich zwei aufweisen, wobei die Lochzahl eine Anzahl der Nuten pro Polzahl und Strang der elektrischen Maschine sein kann. Durch die erfindungsgemäße Wahl der Lochzahl können in vorteilhafter Weise Oberwellen des Magnetfelds reduziert sein bzw. kann das Magnetfeld einen geringen Oberfeldanteil aufweisen, was sich wiederum vorteilhaft auf ein Drehmoment der elektrischen Maschine auswirken kann. Auch können dadurch Wirbelstromverluste gering gehalten werden, was zu einer verringerten Erwärmung der Magnetelemente während des Betriebs der elektrischen Maschine führen kann, so dass insbesondere kostengünstige Magnetelemente eingesetzt werden können.

Gemäß einer Ausführungsform der Erfindung sind der Stator und der Rotor in radialer Richtung der elektrischen Maschine über einen Luftspalt voneinander beabstandet, wobei ein Verhältnis einer in der radialen Richtung bemessenen Luftspaltdicke des Luftspalts zu einem Statorinnendurchmesser des Stators zwischen 0,006 und 0,012, vorzugsweise zwischen 0,0065 und 0,0115, beträgt. Dadurch können in vorteilhafter Weise Oberfeldanteile gedämpft werden und Wirbelstromverluste und/oder Eisenverluste können gering gehalten werden. Auch kann dadurch ein Wirkungsgrad der elektrischen Maschine gesteigert und/oder optimiert sein.

Gemäß einer Ausführungsform der Erfindung beträgt ein Statoraußendurchmesser des Stators zwischen 100 mm und 500 mm, vorzugsweise zwischen 110 mm und 500 mm.

Gemäß einer Ausführungsform der Erfindung beträgt ein Verhältnis einer inneren Pollückenbreite der elektrischen Maschine zu einer äußeren Pollückenbreite zwischen 0,3 und 4,0, vorzugsweise zwischen 0,3 und 3,7. Allgemein kann die Pollücke einen Abstand einer Außenkante einer der Magnettaschen zu einem Rand bzw. einer Berandung eines Pols der elektrischen Maschine bezeichnen. Die innere Pollückenbreite kann dabei einen Abstand einer radial innenliegenden Außenkante einer der V-förmig angeordneten Magnettaschen zum Rand des Pols bezeichnen, und die äußere Pollückenbreite kann einen Abstand einer radial außenliegenden Außenkante der Magnettasche zum Rand des Pols bezeichnen. Die radial außenliegende Außenkante der Magnettasche liegt dabei in radialer Richtung näher am Stator als die radial innenliegende Außenkante. Das erfindungsgemäße Verhältnis der inneren zur äußeren Pollückenbreite kann sich vorteilhaft auf eine Stabilität der elektrischen Maschine sowie ein Drehmoment auswirken.

Gemäß einer Ausführungsform der Erfindung ist eine kleinste in radialer Richtung bemessene Dicke eines Steges zwischen einer der ersten und zweiten Magnettaschen und einem Rotoraußendurchmesser des Rotors kleiner oder gleich 1,2 mm, vorzugsweise kleiner oder gleich 1,1 mm. Auch dies kann sich vorteilhaft auf eine mechanische Stabilität und ein Drehmoment der elektrischen Maschine auswirken. Der Steg kann dabei einen Bereich zwischen den Magnettaschen und dem Rotoraußendurchmesser bezeichnen, welcher die Magnettaschen in Umfangsrichtung des Rotors umlaufen kann.

Gemäß einer Ausführungsform der Erfindung beträgt eine Polpaarzahl der elektrischen Maschine vier. Mit anderen Worten kann die elektrische Maschine vier Polpaare bzw. acht Pole aufweisen.

Gemäß einer Ausführungsform der Erfindung weist der Stator radial außenliegend ein Joch auf, welches die Nuten und die Zähne des Stators in Umfangsrichtung umläuft, wobei ein Verhältnis einer in radialer Richtung bemessenen Dicke des Jochs zu einer in radialer Richtung bemessenen Zahnhöhe der Zähne des Stators zwischen 0,6 und 1,1, vorzugsweise zwischen 0,61 und 1,02, beträgt. Derart kann in vorteilhafter Weise eine magnetische Leitfähigkeit des Stators optimiert sein.

Gemäß einer Ausführungsform der Erfindung beträgt ein Verhältnis einer mittleren Zahnbreite der Zähne zu einer in radialer Richtung bemessenen Zahnhöhe der Zähne des Stators zwischen 0,2 und 0,4, vorzugsweise zwischen 0,22 und 0,31. Die mittlere Zahnbreite kann dabei die Hälfte der Summe einer radial außenliegenden Breite eines Zahns und einer radial innenliegenden Breite des Zahns sein, wobei die jeweiligen Breiten orthogonal zur radialen Richtung bemessen sein können.

Gemäß einer Ausführungsform der Erfindung beträgt ein Verhältnis einer äußeren Nutbreite zu einer inneren Nutbreite der Nuten des Stators zwischen 0,9 und 1,1. Die äußere Nutbreite kann eine Breite der Nut an einer radial außenliegenden Kante der Nut und die innere Nutbreite kann eine Breite der Nut an einer radial innenliegenden Kante der Nut bezeichnen. Die radial innenliegende Kante kann dabei der radial außenliegenden in radialer Richtung gegenüberliegen. Die Nutbreiten können jeweils orthogonal zur radialen Richtung bemessen sein. Dadurch kann das durch in den Nuten angeordnete Statorwicklungen erzeugte Statormagnetfeld in vorteilhafter Weise weiter optimiert sein. Ferner kann durch möglichst parallelflankige Nuten ein größerer Kupferfüllfaktor und damit eine verlustärmere elektrische Maschine bereitgestellt werden.

Gemäß einer Ausführungsform der Erfindung sind die erste Magnettasche und die zweite Magnettasche in Umfangsrichtung der elektrischen Maschine über einen Mittelsteg und/oder eine Brücke des Rotors voneinander beabstandet, wobei eine Dicke des Mittelstegs kleiner oder gleich 1,2 mm, vorzugsweise kleiner oder gleich 1,1 mm, ist. Die Dicke des Mittelstegs kann dabei eine kleinste Dicke des Mittelstegs sein und einen kleinsten Abstand der V-förmig zueinander angeordneten Magnettaschen bezeichnen. Durch den geringen Abstand der beiden Magnettaschen kann sichergestellt sein, dass durch Vermeidung von magnetischen Kurzschlüssen ein Großteil des von den Magnetelementen erzeugten Magnetfeldes zum Antrieb des Rotors genutzt werden kann. Entsprechend kann dadurch ein Drehmoment weiter gesteigert sein.

Gemäß einer Ausführungsform der Erfindung beträgt ein Abstand eines des ersten und zweiten Magnetelements zu dem Mittelsteg zwischen 0 mm und 2,3 mm, vorzugsweise zwischen 0,0 mm und 2,2 mm. Der Abstand kann dabei einen kleinsten Abstand eines der Magnetelemente zum Mittelsteg bezeichnen und etwa von einer dem Mittelsteg nächstgelegenen Kante des jeweiligen Magnetelements zu einer dieser Kante gegenüberliegenden Kante des Mittelstegs bemessen sein.

Es wird darauf hingewiesen, dass einige der möglichen Merkmale und Vorteile der elektrischen Maschine hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

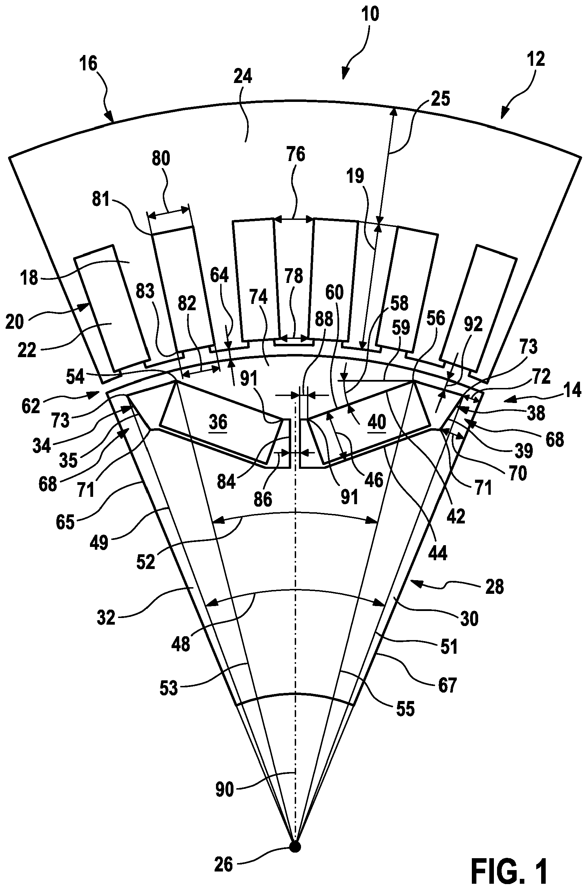

Fig. 1 zeigt einen Querschnitt eines Teils einer elektrischen Maschine gemäß einer Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

Fig. 1 zeigt einen Querschnitt eines Teils einer elektrischen Maschine 10 gemäß einer Ausführungsform der Erfindung, wobei ein Segment 12 mit einem magnetischen Pol 14 der elektrischen Maschine 10 dargestellt ist. Die elektrische Maschine 10 weist eine Mehrzahl in Umfangsrichtung nebeneinander angeordneter derartiger Segmente 12 auf. Die elektrische Maschine 10 kann etwa eine permanent erregte Synchronmaschine sein.

Die elektrische Maschine 10 weist einen Stator 16 auf. Der Stator 16 weist entlang eines Umfangs des Stators 16 nebeneinander angeordnete Nuten 20 auf, welche jeweils durch einen Zahn 18 des Stators 16 voneinander beabstandet und/oder getrennt sind. In den Nuten 20 ist jeweils eine Statorwicklung 22 angeordnet. Radial außenliegend weist der Stator 16 ferner ein Joch 24 auf, welches die Zähne 18 und Nuten 20 in Umfangsrichtung umläuft. Das Joch 24 kann somit einen Außenbereich des Stators 16 bezeichnen.

Weiter weist die elektrische Maschine 10 einen um eine Drehachse 26 relativ zum Stator 16 drehbar gelagerten und konzentrisch zum Stator 16 angeordneten Rotor 28 auf. Der Rotor 28 kann wenigstens ein Lamellenpaket 30 aufweisen, welches aus einer Mehrzahl von in Längserstreckungsrichtung des Rotors 28 übereinander gestapelten Blechlamellen 32 bestehen kann. Pro Pol 14 der elektrischen Maschine 10 weist der Rotor 28 jeweils eine erste Magnettasche 34 mit einem darin angeordneten wenigstens einen ersten Magnetelement 36 und eine zweite Magnettasche 38 mit einem darin angeordneten wenigsten einen zweiten Magnetelement 40 auf. Die Magnettaschen 34, 38 können z.B. als Ausstanzungen in das Lamellenpaket 30 bzw. in die Blechlamellen 32 eingebracht sein. Die Magnettaschen 34, 38 können sich dabei im Wesentlichen über eine gesamte Länge des Rotors 28 erstrecken und pro Magnettasche 34, 38 kann eine Mehrzahl von Magnetelementen 36, 40, etwa Permanentmagneten, in Längserstreckungsrichtung des Rotors 28 nebeneinander angeordnet sein. Die Magnettaschen 34, 38 können jeweils im Wesentlichen quaderförmige Ausnehmungen in dem Rotor 28 ausbilden, welche in einem Querschnitt durch den Rotor 28 jeweils zwei im Wesentlich parallel zueinander und parallel zur Drehachse 26 des Rotors 28 verlaufende Hauptflächen 42, 44 aufweisen, auf welchen die Magnetelemente 36, 40 abgestützt sein können. Ein Abstand der beiden Hauptflächen 42, 44 wird als Magnettaschenhöhe 46 einer Magnetasche 34, 38 bezeichnet. Die beiden Magnettaschen 34, 38 können sich ferner bezüglich einer Polmitte 90 in Umfangsrichtung gegenüberliegen. Die Magnetelemente 36, 40 können an den Hauptflächen 42, 44 anliegen oder von zumindest einer der Hauptflächen 42, 44 beabstandet sein, d.h. eine Höhe der Magnetelemente 36, 40 kann kleiner als die Magnettaschenhöhe 46 sein.

Die erste Magnettasche 34 und die zweite Magnettasche 38 weisen eine gemeinsame Polbedeckung 48 auf, welche über einen Winkel zwischen einer ersten Außenkante 35 der ersten Magnettasche 34 und einer zweiten Außenkante 39 der zweiten Magnettasche 38 gegeben ist. Die erste Außenkante 35 und die zweiten Außenkante 39 sind dabei an zwei sich gegenüberliegenden Randbereichen des Pols 14 der elektrischen Maschine 10 angeordnet. Mit anderen Worten kann die gemeinsame Polbedeckung 48 einen Winkel zwischen einem ersten an der ersten Außenkante 35 der ersten Magnettasche 34 anliegenden Schenkel 49 (bzw. einer ersten Tangente 49) und einem zweiten an der zweiten Außenkante 39 der zweiten Magnettasche 38 anliegenden Schenkel 51 (bzw. einer zweiten Tangente 51) bezeichnen. Die Polbedeckung 48 wird dabei typischerweise in Grad elektrisch (°el.) angegeben, welche über eine Polpaarzahl der elektrischen Maschine 10 in mechanische Grad umgerechnet werden kann. Die gemeinsame Polbedeckung 48 der ersten Magnettasche 34 und der zweiten Magnettasche 38 beträgt zwischen 152 °el. und 175 °el., vorzugsweise zwischen 152,7 °el. und 174,5 °el..

Weiter beträgt ein Verhältnis der Magnettaschenhöhe 46 zu der gemeinsamen Polbedeckung 48 der ersten Magnettasche 34 und der zweiten Magnettasche 38 zwischen 0,03 mm/°el. und 0,041 mm/°el.. Vorzugsweise beträgt das Verhältnis der Magnettaschenhöhe 46 zur gemeinsamen Polbedeckung 48 zwischen 0,0307 mm/°el. und 0,0409 mm/°el.. Dadurch kann in vorteilhafter Weise ein Drehmoment, insbesondere ein Reluktanzmoment, der elektrischen Maschine 10 optimiert und/oder maximiert sein.

Weiter weist die elektrische Maschine 10 eine gemeinsame Polbedeckung 52 des ersten Magnetelements 36 und des zweiten Magnetelements 40 zwischen 104 °el. und 120 °el., vorzugsweise zwischen 104,1°el. und 119,5 °el., auf. Die Polbedeckung 52 kann als Winkel zwischen einem ersten Schenkel 53 (bzw. einer ersten Tangente 53), welcher an einer dem Stator 16 am nächstgelegenen Kante 54 des ersten Magnetelements 36 anliegen kann, und einem zweiten Schenkel 55 (bzw. einer zweiten Tangente 55), welcher an einer dem Stator 16 am nächstgelegenen Kante 56 des zweiten Magnetelements 40 anliegen kann, bemessen sein.

Das erste Magnetelement 36 und das zweite Magnetelement 40 sind V-förmig zueinander angeordnet, wobei ein V-Winkel 58 des ersten Magnetelements 36 und des zweiten Magnetelements 40 jeweils zwischen 10 °mech. (Grad meachanisch) und 29 °mech., vorzugsweise zwischen 11,0 °mech. und 28,3°mech., beträgt. Der V-Winkel 58 kann dabei zwischen einer waagerechten Tangente 59 an der dem Stator 16 am nächstgelegenen Kante 54, 56 eines der Magnetelemente 36, 40 und einer in Richtung des Stators 16 gerichteten Hauptfläche 60 des jeweiligen Magnetelements 36, 40 bemessen sein.

Weiter beträgt ein Verhältnis eines Statorinnendurchmessers des Stators 16 zu einem Statoraußendurchmesser des Stators 16 zwischen 0,6 und 0,8, vorzugsweise zwischen 0,64 und 0,72. Der Statoraußendurchmesser des Stators 16 beträgt zwischen 100 mm und 500 mm, vorzugsweise zwischen 110 mm und 500 mm.

Die elektrische Maschine 10 weist ferner eine Lochzahl größer oder gleich eins auf. Insbesondere kann die elektrische Maschine 10 eine Lochzahl gleich zwei aufweisen. Eine Polpaarzahl der elektrischen Maschine 10 kann insbesondere vier betragen.

Der Stator 16 und der Rotor 28 der elektrischen Maschine 10 sind in radialer Richtung über einen Luftspalt 62 voneinander beabstandet, wobei ein Verhältnis einer in der radialen Richtung bemessenen Luftspaltdicke 64 des Luftspalts 62 zu dem Statorinnendurchmesser des Stators 16 zwischen 0,006 und 0,012, vorzugsweise zwischen 0,0065 und 0,0115, beträgt.

Zwischen der ersten Außenkante 35 der ersten Magnettasche 34 und einem Rand 65 bzw. einer Berandung 65 des Pols 14 sowie zwischen der zweiten Außenkante 39 der zweiten Magnettasche 38 und einem weiteren Rand 67 bzw. einer weiteren Berandung 67 des Pols 14 weist die elektrische Maschine 10 jeweils eine Pollücke 68 auf. Allgemein kann die Pollücke 68 einen Abstand einer der Außenkanten 35, 39 einer der Magnettaschen 34, 38 zu einem der Ränder 65, 67 des Pols 15 der elektrischen Maschine 10 bezeichnen. Jede der Pollücken 68 weist eine innere Pollückenbreite 70 und eine äußere Pollückenbreite 72 auf. Die innere Pollückenbreite 70 kann dabei einen Abstand einer radial innenliegenden Außenkante 71 einer der Magnettaschen 34, 38 zum jeweils direkt benachbart angeordneten Rand 65, 67 des Pols 14 bezeichnen, und die äußere Pollückenbreite 72 kann einen Abstand einer radial außenliegenden Außenkante 73 einer der Magnettaschen 34, 38 zum jeweils direkt benachbarten Rand 65, 67 des Pols 14 bezeichnen. Die radial außenliegende Außenkante 73 liegt dabei in radialer Richtung näher am Stator 16 als die radial innenliegende Außenkante 71. Ein Verhältnis der inneren Pollückenbreite 70 zur äußeren Pollückenbreite 72 beträgt zwischen 0,3 und 4,0, vorzugsweise zwischen 0,3 und 3,7.

Zwischen den Magnettaschen 34, 38 und einem Rotoraußendurchmesser des Rotors 28 weist der Rotor 28 einen Steg 74 auf, welcher an den Magnettaschen 34, 38 an einem Außenumfang des Rotors 28 entlangläuft. Eine kleinste, in radialer Richtung bemessene Dicke 92 des Steges 74 ist zwischen der ersten Magnettasche 34 und der zweiten Magnettasche 38 und dem Rotoraußendurchmesser des Rotors 28 vorgesehen und ist kleiner oder gleich 1,2 mm, vorzugsweise kleiner oder gleich 1,1 mm.

Weiter beträgt ein Verhältnis einer in radialer Richtung bemessenen Dicke 25 des Jochs 24 zu einer in radialer Richtung bemessenen Zahnhöhe 19 der Zähne 18 des Stators 16 zwischen 0,6 und 1,1, vorzugsweise zwischen 0,61 und 1,02. Die Zahnhöhe 19 kann dabei eine in radialer Richtung bemessene Länge der Zähne 18 bezeichnen.

Weiter beträgt ein Verhältnis einer mittleren Zahnbreite der Zähne 18 zu der in radialer Richtung bemessenen Zahnhöhe 19 der Zähne 18 des Stators 16 zwischen 0,2 und 0,4, vorzugsweise zwischen 0,22 und 0,31. Die Zahnbreite kann allgemein einen Abstand zweier direkt benachbarter Nuten 20 bezeichnen. Die mittlere Zahnbreite kann als die Hälfte der Summe, d.h. als arithmetisches Mittel, einer radial außenliegenden (maximalen) Breite 76 eines Zahns 18 und einer radial innenliegenden (minimalen) Breite 78 des Zahns 18 sein, wobei die jeweiligen Breiten 76, 78 orthogonal zur radialen Richtung bemessen sein können.

Weiter beträgt ein Verhältnis einer äußeren Nutbreite 80 zu einer inneren Nutbreite 82 der Nuten 20 des Stators 16 zwischen 0,9 und 1,1. Die äußere Nutbreite 80 kann eine Breite einer Nut 20 an einer radial außenliegenden Kante 81 der Nut 20 und die innere Nutbreite 82 kann eine Breite der Nut 20 an einer radial innenliegenden Kante 83 der Nut 20 bezeichnen. Die radial innenliegende Kante 83 kann dabei der radial außenliegenden Kante 81 in radialer Richtung gegenüberliegen. Die Nutbreiten 80, 82 können jeweils orthogonal zur radialen Richtung bemessen sein.

Die erste Magnettasche 34 und die zweite Magnettasche 38 sind in Umfangsrichtung der elektrischen Maschine 10 über einen Mittelsteg 84 bzw. eine Brücke des Rotors 28 voneinander beabstandet, wobei eine Dicke 86 des Mittelstegs 84 kleiner oder gleich 1,2 mm ist. Die Dicke 86 des Mittelstegs 84 kann dabei eine einen kleinsten Abstand der V-förmig zueinander angeordneten Magnettaschen 34, 38 bezeichnen.

Ferner beträgt ein Abstand 88 eines des ersten und zweiten Magnetelements 36, 40 zum Mittelsteg 84 zwischen 0 mm und 2,3 mm, vorzugsweise zwischen 0,0 mm und 2,2 mm. Der Abstand 88 kann dabei einen kleinsten Abstand eines der Magnetelemente 36, 40 zum Mittelsteg 84 bezeichnen und etwa von einer dem Mittelsteg 84 nächstgelegenen Kante 91 des jeweiligen Magnetelements 36, 40 zum Mittelsteg 84 bemessen sein.

## Patentansprüche

1. Permanent erregte elektrische Maschine (10), aufweisend:
einen Stator (16), welcher entlang eines Umfangs des Stators (16) nebeneinander angeordnete und jeweils durch einen Zahn (18) des Stators (16) voneinander beabstandete Nuten (20) aufweist, in welchen Nuten (20) jeweils eine Statorwicklung (22) angeordnet ist; und
einen um eine Drehachse (26) relativ zum Stator (16) drehbar gelagerten und konzentrisch zum Stator (16) angeordneten Rotor (28),
wobei der Rotor (28) pro Pol (14) der elektrischen Maschine (10) jeweils eine erste Magnettasche (34) mit einem darin angeordneten wenigstens einen ersten Magnetelement (36) und eine zweite Magnettasche (38) mit einem darin angeordneten wenigsten einen zweiten Magnetelement (40) aufweist,
wobei die erste Magnettasche (34) und die zweite Magnettasche (38) jeweils eine Magnettaschenhöhe (46) aufweisen,
**dadurch gekennzeichnet, dass**
ein Verhältnis der Magnettaschenhöhe (46) zu einer gemeinsamen Polbedeckung (48) der ersten Magnettasche (34) und der zweiten Magnettasche (38) zwischen 0,03 mm/°el. und 0,041 mm/°el. beträgt, wobei die gemeinsame Polbedeckung (48) einen Winkel zwischen einer an einer ersten Außenkante (35) der ersten Magnettasche (34) anliegenden ersten Tangente (49) und einer an einer zweiten Außenkante (39) der zweiten Magnettasche (38) anliegenden zweiten Tangente (51) bezeichnet.

2. Elektrische Maschine (10) nach Anspruch 1,
wobei eine Polbedeckung (52) des ersten Magnetelements (36) und des zweiten Magnetelements (40) zwischen 104 °el. und 120 °el. beträgt.

3. Elektrische Maschine nach Anspruch 1 oder 2,
wobei die gemeinsame Polbedeckung (48) der ersten Magnettasche (34) und der zweiten Magnettasche (38) zwischen 152 °el. und 175 °el. beträgt.

4. Elektrische Maschine (10) nach einem der voranstehenden Ansprüche,
wobei das erste Magnetelement (36) und das zweite Magnetelement (40) V-förmig zueinander angeordnet sind; und
wobei ein V-Winkel (58) des ersten Magnetelements (36) und des zweiten Magnetelements (40) jeweils zwischen 10 °mech. und 29 °mech. beträgt.

5. Elektrische Maschine (10) nach einem der voranstehenden Ansprüche,
wobei ein Verhältnis eines Statorinnendurchmessers des Stators (16) zu einem Statoraußendurchmesser des Stators (16) zwischen 0,6 und 0,8 beträgt.

6. Elektrische Maschine (10) nach einem der voranstehenden Ansprüche,
wobei die elektrische Maschine (10) eine Lochzahl größer oder gleich eins aufweist.

7. Elektrische Maschine (10) nach einem der voranstehenden Ansprüche,
wobei der Stator (16) und der Rotor (28) in radialer Richtung der elektrischen Maschine (10) über einen Luftspalt (62) voneinander beabstandet sind, und wobei ein Verhältnis einer in der radialen Richtung bemessenen Luftspaltdicke (64) des Luftspalts (62) zu einem Statorinnendurchmesser des Stators (16) zwischen 0,006 und 0,012 beträgt.

8. Elektrische Maschine (10) nach einem der voranstehenden Ansprüche,
wobei ein Statoraußendurchmesser des Stators (16) zwischen 100 mm und 500 mm beträgt.

9. Elektrische Maschine (10) nach einem der voranstehenden Ansprüche,
wobei ein Verhältnis einer inneren Pollückenbreite (70) der elektrischen Maschine (10) zu einer äußeren Pollückenbreite (72) zwischen 0,3 und 4,0 beträgt.

10. Elektrische Maschine (10) nach einem der voranstehenden Ansprüche,
wobei eine kleinste in radialer Richtung bemessene Dicke (92) eines Steges (74) zwischen einer der ersten und zweiten Magnettaschen (34, 38) und einem Rotoraußendurchmesser des Rotors (28) kleiner oder gleich 1,2 mm ist; und/oder
wobei eine Polpaarzahl der elektrischen Maschine (10) vier beträgt.

11. Elektrische Maschine (10) gemäß einem der voranstehenden Ansprüche,
wobei der Stator (16) radial außenliegend ein Joch (24) aufweist, welches die Nuten (20) und die Zähne (18) des Stators (16) in Umfangsrichtung umläuft,
wobei ein Verhältnis einer in radialer Richtung bemessenen Dicke (25) des Jochs (24) zu einer in radialer Richtung bemessenen Zahnhöhe (19) der Zähne (18) des Stators (16) zwischen 0,6 und 1,1 beträgt.

12. Elektrische Maschine (10) nach einem der voranstehenden Ansprüche,
wobei ein Verhältnis einer mittleren Zahnbreite der Zähne (18) zu einer Zahnhöhe (19) der Zähne (18) des Stators (16) zwischen 0,2 und 0,4 beträgt; und/oder
wobei ein Verhältnis einer äußeren Nutbreite (80) zu einer inneren Nutbreite (82) der Nuten (20) des Stators (16) zwischen 0,9 und 1,1 beträgt.

13. Elektrische Maschine (10) nach einem der voranstehenden Ansprüche,
wobei die erste Magnettasche (34) und die zweite Magnettasche (38) in Umfangsrichtung der elektrischen Maschine (10) über einen Mittelsteg (84) des Rotors (28) voneinander beabstandet sind und wobei eine Dicke (86) des Mittelstegs (84) kleiner oder gleich 1,2 mm ist; und/oder
wobei ein Abstand eines der ersten und zweiten Magnetelemente (36, 40) zu dem Mittelsteg (84) zwischen 0 und 2,3 mm beträgt.

## Claims

1. Permanent-magnet electric machine (10), having:
a stator (16), which has slots (20) arranged next to one another along a circumference of the stator (16) and spaced apart from one another in each case by a tooth (18) of the stator (16), in which slots (20) a stator winding (22) is respectively arranged; and
a rotor (28) mounted rotatably about an axis of rotation (26) in relation to the stator (16) and arranged concentrically with respect to the stator (16),
wherein, for each pole (14) of the electric machine (10), the rotor (28) has in each case a first magnet pocket (34) with at least one first magnet element (36) arranged therein and a second magnet pocket (38) with at least one second magnet element (40) arranged therein,
wherein the first magnet pocket (34) and the second magnet pocket (38) each have a magnet pocket height (46),
**characterized in that**
a ratio of the magnet pocket height (46) to a common pole arc (48) of the first magnet pocket (34) and the second magnet pocket (38) is between 0.03 mm/°el. and 0.041 mm/°el, wherein the common pole arc (48) refers to an angle between a first tangent (49), lying against a first outer edge (35) of the first magnet pocket (34), and a second tangent (51), lying against a second outer edge (39) of the second magnet pocket (38) .

2. Electric machine (10) according to Claim 1,
wherein the pole arc (52) of the first magnet element (36) and of the second magnet element (40) is between 104°el and 120°el.

3. Electric machine according to Claim 1 or 2,
wherein the common pole arc (48) of the first magnet pocket (34) and the second magnet pocket (38) is between 152°el and 175°el.

4. Electric machine (10) according to one of the preceding claims,
wherein the first magnet element (36) and the second magnet element (40) are arranged in a V-shaped manner in relation to one another; and
wherein a V angle (58) of the first magnet element (36) and the second magnet element (40) is in each case between 10°mech and 29°mech.

5. Electric machine (10) according to one of the preceding claims,
wherein a ratio of a stator inside diameter of the stator (16) to a stator outside diameter of the stator (16) is between 0.6 and 0.8.

6. Electric machine (10) according to one of the preceding claims,
wherein the electric machine (10) has a number of holes greater than or equal to one.

7. Electric machine (10) according to one of the preceding claims,
wherein the stator (16) and the rotor (28) are spaced apart from one another in the radial direction of the electric machine (10) by way of an air gap (62), and
wherein a ratio of an air-gap thickness (64) of the air gap (62), measured in the radial direction, to a stator inside diameter of the stator (16) is between 0.006 and 0.012.

8. Electric machine (10) according to one of the preceding claims,
wherein a stator outside diameter of the stator (16) is between 100 mm and 500 mm.

9. Electric machine (10) according to one of the preceding claims,
wherein a ratio of an inner pole-gap width (70) of the electric machine (10) to an outer pole-gap width (72) is between 0.3 and 4.0.

10. Electric machine (10) according to one of the preceding claims,
wherein a smallest thickness (92), measured in the radial direction, of a web (74) between one of the first and second magnet pockets (34, 38) and a rotor outside diameter of the rotor (28) is less than or equal to 1.2 mm; and/or
wherein a number of pairs of poles of the electric machine (10) is four.

11. Electric machine (10) according to one of the preceding claims,
wherein the stator (16) has radially on the outside a yoke (24), which runs around the slots (20) and the teeth (18) of the stator (16) in the circumferential direction,
wherein a ratio of a thickness (25), measured in the radial direction, of the yoke (24) to a tooth height (19), measured in the radial direction, of the teeth (18) of the stator (16) is between 0.6 and 1.1.

12. Electric machine (10) according to one of the preceding claims,
wherein a ratio of an average tooth width of the teeth (18) to a tooth height (19) of the teeth (18) of the stator (16) is between 0.2 and 0.4; and/or wherein a ratio of an outer slot width (80) to an inner slot width (82) of the slots (20) of the stator (16) is between 0.9 and 1.1.

13. Electric machine (10) according to one of the preceding claims,
wherein the first magnet pocket (34) and the second magnet pocket (38) are spaced apart from one another in the circumferential direction of the electric machine (10) by way of a central web (84) of the rotor (28) and wherein a thickness (86) of the central web (84) is less than or equal to 1.2 mm; and/or wherein a distance of one of the first and second magnet elements (36, 40) from the central web (84) is between 0 and 2.3 mm.

## Revendications

1. Machine électrique à excitation permanente (10), comprenant :
un stator (16) qui comporte des gorges (20) disposées les unes à côté des autres le long d'une périphérie du stator (16) et espacées à chaque fois les unes des autres par une dent (18) du stator (16), gorges dans chacune desquelles (20) est disposé un enroulement de stator (22) ; et
un rotor (28) qui est monté de manière à pouvoir tourner sur un axe de rotation (26) par rapport au stator (16) et qui est disposé concentriquement au stator (16),
le rotor (28) comportant par pôle (14) de la machine électrique (10) une première poche magnétique (34) dans laquelle est disposé au moins un premier élément magnétique (36) et une deuxième poche magnétique (38) dans laquelle est disposé au moins un deuxième élément magnétique (40),
la première poche magnétique (34) et la deuxième poche magnétique (38) ayant chacune une hauteur (46), **caractérisée en ce que**
le rapport de la hauteur (46) à la couverture de pôle commune (48) de la première poche magnétique (34) et de la deuxième poche magnétique (38) est compris entre 0,03 mm/°électrique et 0,041 mm/°électrique, la couverture de pôle commune (48) formant un angle entre une première tangente (49) à un premier bord extérieur (35) de la première poche magnétique (34) et une deuxième tangente (51) à un deuxième bord extérieur (39) de la deuxième poche magnétique (38).

2. Machine électrique (10) selon la revendication 1, la couverture de pôle (52) du premier élément magnétique (36) et du deuxième élément magnétique (40) étant comprise entre 104°électriques et 120° électriques.

3. Machine électrique selon la revendication 1 ou 2, la couverture de pôle commune (48) de la première poche magnétique (34) et de la deuxième poche magnétique (38) étant comprise entre 152° électrique et 175° électrique.

4. Machine électrique (10) selon l'une des revendications précédentes,
le premier élément magnétique (36) et le deuxième élément magnétique (40) étant disposés en forme de V l'un par rapport à l'autre ; et
l'angle en V (58) du premier élément magnétique (36) et du deuxième élément magnétique (40) étant compris entre 10° mécaniques et 29° mécaniques.

5. Machine électrique (10) selon l'une des revendications précédentes,
le rapport du diamètre intérieur du stator (16) au diamètre extérieur du stator (16) étant compris entre 0,6 et 0,8.

6. Machine électrique (10) selon l'une des revendications précédentes,
la machine électrique (10) comportant un nombre de trous supérieur ou égal à un.

7. Machine électrique (10) selon l'une des revendications précédentes,
le stator (16) et le rotor (28) étant espacés l'un de l'autre par un entrefer (62) dans la direction radiale de la machine électrique (10), et
le rapport de l'épaisseur (64) de l'entrefer (62), mesurée dans la direction radiale, au diamètre intérieur du stator (16) étant compris entre 0,006 et 0,012.

8. Machine électrique (10) selon l'une des revendications précédentes,
le diamètre extérieur du stator (16) étant compris entre 100 mm et 500 mm.

9. Machine électrique (10) selon l'une des revendications précédentes,
le rapport de la largeur d'espace interpolaire intérieure (70) de la machine électrique (10) à la largeur d'espace interpolaire extérieure (72) étant compris entre 0,3 et 4,0.

10. Machine électrique (10) selon l'une des revendications précédentes,
la plus petite épaisseur (92), mesurée dans la direction radiale, d'une nervure (74) entre l'une des première et deuxième poches magnétiques (34, 38) et un diamètre extérieur du rotor (28) étant inférieure ou égale à 1,2 mm ; et/ou
le nombre de paires de pôles de la machine électrique (10) étant de quatre.

11. Machine électrique (10) selon l'une des revendications précédentes,
le stator (16) comportant radialement à l'extérieur une culasse (24) qui s'étend autour des gorges (20) et des dents (18) du stator (16) dans la direction périphérique,
le rapport d'une épaisseur (25), mesurée dans la direction radiale, de la culasse (24) à une hauteur (19), mesurée dans la direction radiale, des dents (18) du stator (16) étant compris entre 0,6 et 1,1.

12. Machine électrique (10) selon l'une des revendications précédentes,
le rapport de la largeur moyenne des dents (18) à la hauteur (19) des dents (18) du stator (16) étant compris entre 0,2 et 0,4 ; et/ou
le rapport de la largeur extérieure (80) à la largeur intérieure (82) des gorges (20) du stator (16) étant compris entre 0,9 et 1,1.

13. Machine électrique (10) selon l'une des revendications précédentes,
la première poche magnétique (34) et la deuxième poche magnétique (38) étant espacées l'une de l'autre par une nervure centrale (84) du rotor (28) dans la direction périphérique de la machine électrique (10) et l'épaisseur (86) de la nervure centrale (84) étant inférieure ou égale à 1,2 mm ; et/ou
la distance de l'un des premier et deuxième éléments magnétiques (36, 40) à la nervure centrale (84) étant comprise entre 0 et 2,3 mm.
